# EUROPEAN PATENT SPECIFICATION

(11) **EP 3 341 089 B1**
(45) Date of publication and mention of the grant of the patent: **14.04.2021**
(21) Application number: 16838163.0
(22) Date of filing: 24.08.2016
(51) Int. Cl.: A63B 21/06, A63B 24/00, A63B 71/06, A63B 21/005, A63B 21/002, A63B 21/055, A63B 21/00, A63B 21/16, A63B 22/02, A63B 22/20, A63B 23/02, A63B 23/035, A63B 22/00, A63B 21/008, A63F 13/65

(54) **STRENGTH TRAINING DEVICE USING MAGNETORHEOLOGICAL FLUID CLUTCH APPARATUS**
KRAFTTRAININGSVORRICHTUNG UNTER VERWENDUNG EINER MAGNETORHEOLOGISCHEN FLUIDKUPPLUNGSVORRICHTUNG
DISPOSITIF D'ENTRAÎNEMENT PHYSIQUE EMPLOYANT UN APPAREIL D'EMBRAYAGE À FLUIDE MAGNÉTORHÉOLOGIQUE

(30) Priority: 24.08.2015 US 201562208963 P; 10.05.2016 US 201662334039 P
(43) Date of publication of application: 04.07.2018
(73) Proprietor: Exonetik Inc., Sherbrooke, Québec J1H 1M4 (CA)
(72) Inventor: LAROSE, Pascal, Sherbrooke, Québec J1J 4J3 (CA); DENNINGER, Marc, Sherbrooke, Québec J1N 2M9 (CA); JULIO, Guifré, Sherbrooke, Québec J1H 3T8 (CA); PLANTE, Jean-Sébastien, Sherbrooke, Québec J1H 1B9 (CA)
(74) Representative: Plasseraud IP
(86) International application number: PCT/CA2016/050995
(87) International publication number: WO 2017/031585

(56) References cited:
- EP-A1- 2 255 851
- WO-A1-2014/196866
- KR-B1- 101 470 327
- US-A- 4 842 274
- US-A- 5 015 926
- US-A- 5 409 435
- US-A- 5 435 798
- US-A- 5 435 798
- US-A- 5 988 336
- US-A1- 2011 195 819
- US-A1- 2012 142 497
- US-A1- 2012 142 497
- US-A1- 2014 137 679
- US-A1- 2015 375 045
- US-B2- 7 935 029
- US-B2- 7 935 029

## Description

### TECHNICAL FIELD

The present application relates generally to strength training devices, such as gym equipment, weightlifting equipment or machines, muscle workout equipment, functional training equipment, used in workouts by users to build muscle strength and/or improve their health.

### BACKGROUND OF THE ART

Strength training devices have existed for years. In its simplest expression, a strength training device takes the form of a single degree of freedom (DOF) fitness equipment. Strength training devices may have different names, such as gym equipment, weightlifting equipment, muscle workout equipment, functional training equipment, collectively referred to as strength training devices. In more complex applications, strength devices may incorporate a multitude of DOFs. A training device is built with the purpose of training parts of the body, increasing the strength, the resistance of some of the muscles, the performance of the cardiovascular system or training of the cognitive capacity, only to name a few.

Strength training devices are widely used by individuals at home and in gyms to obtain strength and/or aerobic exercise. They are also used in order to rehabilitate disabled or partially disabled body parts. From free weights, strength training has now progressed to typically include the use of one or more exercise devices for greater ease of use and safety. For example, U.S. Pat. No. 3,858,807 discloses cams to provide nonlinear force modulation compatible with that developed by human joints and muscles. In addition, many types of exercise devices have been developed over the years, such as, for example, stationary bicycles, rowing devices, treadmills, cross-country ski trainers, ab devices and fitness centers. Fitness centers, for example, are particularly popular for toning the muscles. While existing exercises and devices may assist in developing the body, it is not clear that they are necessarily optimal in terms of physical efficiency, especially when combined with psychological aspects of training. Numerous conventional strength training devices use the effect of gravity to provide a linear force modulation or force against which the individual works to build his body strength. Likewise, spring devices are comparable to the effect of gravity in that the force modulation thereof is linear or unidirectional. Even devices having pulleys and cams to change the weight to movement ratio may not provide optimal training conditions.

A simple and well known form of body building exercise is the curl, the movement of which involves a rotation throughout a range of movement of approximately 160 degrees. At the start of a curl, the movement is near horizontal, straight forward; approximately mid-way through this exercise the movement is vertical, straight up; and at the end of the exercise the movement is approximately horizontal again, but in the opposite direction. During the entire movement of this exercise, the force modulation is generally vertical in a straight down direction. Although the force modulation remains constant, the exerciser may feel as if the movement becomes heavier as the movement progresses from the starting position to the midpoint and as if the movement becomes lighter thereafter. In the normal finishing position of the curl, there is no force modulation. At this point it is possible to hold that position almost indefinitely, with absolutely no work being demanded on the part of the bending muscles of the upper arms. This occurs because during a curl the moment arm of the weight is constantly changing as the movement progresses with direct force modulation being provided only at the infinitely small point where force modulation is being moved vertically. A close study of conventional strength training devices will show that in many cases direct force modulation is provided only within a limited range of movement, and that in many conventional devices there is no direct force modulation at any point and no direct force modulation changing as a function of time.

If the normal strength generated by human muscles involved matched the apparently changing force modulation provided by an exercise such as the curl, then the movement would feel even, that is, the force modulation at no point over the range of movement would appear to be any heavier than that at any other point. However, since in fact the strength generated by the muscles does not match a change in force modulation, the force modulation at some points may feel heavier than at other points; so-called sticking points are encountered, where the weights feel heavier. Along with this, there will be points where there is little or no force modulation to the movement of the force modulation. In addition to the mechanic of movement just described, it is to be noted that the force of the muscle also varies depending on the bending angle. As an example, a muscle may be stronger when half bent than when in full extension. It is also noted that the force of the muscle may also be dependent on the direction of movement and on the direction of the application of the force. A muscle will not have the same strength in concentric (contraction of the muscle) movement than in eccentric (extension of the muscle) movement. For example, the arm may be trained in at least 4 ways, i.e., in contraction and extension with the force applied in one direction and also in contraction and extension with the force applied in the opposite direction. The force of the muscle can almost be trained in an infinite number of combination (i.e. rotation movement may be added), whereby it is a challenge for one piece of equipment to optimize the training for a given movement. A way to improve this is to add a force modulation supplying means, such as an eddy current brake, friction brake, electromagnetic brake or alternator. Such force modulation devices may provide a braking force during the concentric movement of the muscle while the actuator may not perfectly match the muscle force at all points. These modulation methods are not usually time dependent. Considering that the optimal training could vary the load in function of the position of the body and of the direction of the force, as a function of time, there is room for improvement. Also, the fact that many people may train on the same piece of equipment adds to the complexity of reaching optimal personalized training. If the complexity is high for a single DOF, it may be even more complex when multiple DOFs of training are added.

New kinds of actuators are especially needed when taking into consideration the integration of actuators in multi-DOF training devices. In such devices, in order to ensure smooth movement, the actuators should have a bandwidth that is higher than the human body. A higher bandwidth will make the system more transparent to the user. A system with a low bandwidth would not adapt rapidly enough to the change of the user movement, such that the user may sense the presence of a mechanical device connected to him/her as changes would be choppy. For example, if a device applying a proportional resistance to the user-applied force is sought to create the illusion of moving in a thick medium and the system has low bandwidth, the resistance would not adapt rapidly enough and would create a delay in the applied force that would be felt by the user. The higher the actuator bandwidth is, the more direct and natural the training device may interact with the body. The higher the bandwidth is, the more transparent to the actuation the system would be and the more natural it would feel. In the future, virtual reality training will require multi DOF devices with actuation systems that will have higher bandwidth than human muscle. For that purpose, new kinds of actuators must be used in virtual training devices.
Examples of background art can be found for example in US5015926A describing an electronically controlled force application mechanism for exercise machines, in US7935029A describing a swimmer training apparatus having force control, or in US5435798A describing an exercise apparatus with electronically variable resistance.

Such devices disclose either magnetic particle clutches or electrorheological (ER) fluid clutches. In contrast to the above mentioned background art, the subject matter of claim 1 of the present disclosure is characterized in that the system of claim 1 comprises at least one magnetorheological fluid clutch apparatus and the at least one MR fluid clutch operates at a bandwidth that is higher than human body muscles.

### SUMMARY

The invention relates to a system for assisting a user in strength training comprising the features of claim 1 and to a strength training apparatus according to claim 15 comprising said system. Further advantageous features are listed in the dependent claims.

### DESCRIPTION OF THE DRAWINGS

Fig 1 is a schematic view of a concept of a strength training equipment with one point of contact with the body;
Fig. 2A is a schematic view of a concept of a magnetorheological (MR) actuator with a MR fluid clutch apparatus to perform manual training in accordance with the present disclosure, in a single degree of modulation;
Fig. 2B is a schematic view of a concept of a MR actuator with a MR fluid clutch apparatus to perform manual training in accordance with the present disclosure, in a single degree of modulation with an additional outside force source;
Fig. 3 is a schematic view of a training apparatus using the actuator of Fig. 2B;
Fig. 4 is a schematic view showing the concept of force modulation using MR fluid clutch apparatuses to manual actuation in accordance with the present disclosure, with two degrees of modulation;
Fig. 5 is a diagram explaining some different training methods;
Fig. 6A is a schematic view of a single DOF rolling abs training device ;
Fig. 6B is a schematic view of a single DOF training device for abs training;
Fig. 7 is a schematic view of a system using MR fluid actuation via a capstan;
Fig. 8 is a perspective view of a manually-actuated training device using MR fluid actuation for multiple input/outputs;
Fig. 9 is a schematic view of a multi DOF strength training device with multiple body contact points, using remotely located MR actuators;
Fig 10 is a schematic view of a multi DOF strength training exoskeleton with multiple body contact points, using remotely located MR actuators;
Fig. 11 is a schematic view of a multi DOF wearable strength training device with multiple body contact points, using remotely located MR actuators;
Fig. 12 is a schematic view of a generic MR fluid clutch apparatus, used by various embodiments of the present disclosure;
Fig. 13A is a schematic view of a power distribution arrangement in a cable-driven training device in accordance with the present disclosure, using MR fluid clutch apparatuses;
Fig. 13B is a schematic view of a power distribution arrangement in a cable-driven training device modulating an outside force source in accordance with the present disclosure, using MR fluid clutch apparatuses;
Fig. 14 is a schematic view of a cable-driven training device using a common power source with a pair of MR fluid clutch apparatuses for antagonistic displacement of an end effector;
Fig. 15 is a schematic view of a cable-driven system using a common power source with MR fluid clutch apparatuses for displacement of an end effector in two rotational degrees of freedom;
Fig. 16 is a schematic view of a fluid-driven training device using a common power source with a pair of MR fluid clutch apparatuses for antagonistic displacement of an end effector;
Fig. 17 is a schematic view of a concept of MR fluid force modulation to manual training using rack and pinion in accordance with the present disclosure, in a single degree of modulation;
Fig. 17A is a schematic view of a tensioning mechanism used to maintain tension in a cable;
Fig. 17B is a schematic view of another tensioning mechanism used to maintain tension in a cable, with rotational to translational conversion;
Fig. 17C is a schematic view of another tensioning mechanism used to maintain tension in a cable, in a rotation to rotation arrangement;
Fig. 18 is a schematic view of a concept of MR fluid force modulation for a power treadmill, in single degree of freedom and a single degree of actuation.
Fig. 19 is a schematic view of a MR fluid clutch apparatus with single degree of actuation, as used in the treadmill of Fig. 18;
Fig. 20 is a schematic view of a concept of MR fluid force modulation for a power treadmill, with reversible rotation capability for single motor rotation direction;
Fig. 21 is a is a schematic view of a MR fluid clutch apparatus as used in the treadmill of Fig. 20;
Fig. 22 is a schematic view of a concept of MR fluid force modulation for a treadmill, providing multiple degrees of freedom;
Fig. 23 is a schematic view of a MR fluid clutch apparatus of closed type;
Fig 24 is a schematic view of a cable MR fluid actuator with one degree of actuation;
Fig 25 is a schematic view of a cable MR fluid actuator with two degrees of actuation; and
Fig. 26 is a schematic view of a controller for use to control the training device.

### DETAILED DESCRIPTION

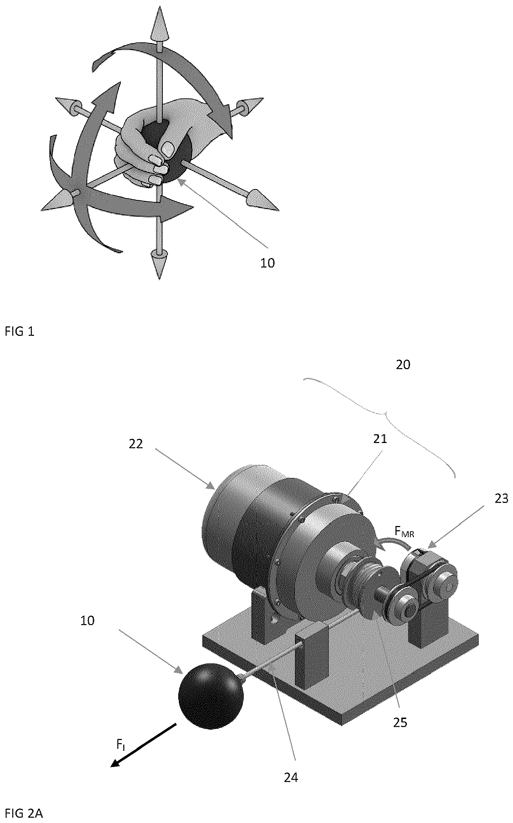

Referring to Fig. 1, there is illustrated a general concept of the present disclosure. In the concept, an effort (force, torque) may be generated on a body contact point or grip 10 for up to 3 translational DOFs and 3 rotational DOFs. This effort may be generated at any contact point with the human body where a force for training is desirable. Many points of contact with the body are possible so it is contemplated to have a force training device with a large number of DOFs. One or more than one DOF forces may be generated by a MR actuator (not shown) in order to train a body part.

Referring to Fig. 2A, there is illustrated a general concept of the present disclosure. In the context of a user-applied force F_{I}, during exercise, a MR actuator 20 featuring a magnetorheological (MR) fluid clutch apparatus 21 may be used to provide some modulation to the user-applied force F_{I} by transmitting a force F_{MR} from a power or torque source 22, in order to boost or lessen the force required to move the grip 10 relative to the input force, i.e., a single degree of modulation. The power source 22 may include an electrical motor and a reduction gearbox, among possible arrangements, including different types of actuation (e.g., hydraulic, pneumatic, electromechanical, etc). The combination of the power source 22 and the MR fluid clutch apparatus 21 forms the MR actuator 20. The position of the grip 10 may be indicated by a sensor 23, such as a position encoder 23. In doing so, the exercise force may benefit from the characteristics of MR fluid clutching such as a high capacity to reduce or increase the force or pressure from the input to the output, a low output inertia for high dynamic response, hence a high bandwidth. In the embodiment of Fig. 2A, a cable 24 and spool 25 are shown between the output of the MR actuator 20 and the grip 10 but other mechanical force transmission means may be used. The cable 24 is part of a force transmission of the strength training device, while the spool 25 is part of a modulation interface, by which actuation of the MR actuator 20 is coupled to the force transmission. MR actuator technology operates at a bandwidth that is higher than the bandwidth of human body muscles and with better force-to-weight ratio, whereby it is desirable to combine MR actuators such as the MR actuator 20 with cable, hydraulic and/or pneumatic transmission of manual actuation. The general concept may be used in various applications, such as fitness system and virtual training devices. In its simplest form, the MR actuator 20 is used as weightlifting equipment. The grip 10 takes any appropriate interface to be handled by a user, also known as cable attachments as they attach to a cable end (e.g., handlebar, olympic bar, curl bar, tricep press down, tricep rope, stirrup handle, etc). The power source 22 is powerful enough to produce torque transmitted via the MR fluid clutch apparatus 21 to equate the range of weights of equivalent weightlifting equipment (e.g. 0-220 lb [0-100 kg]).

The MR actuator 20 may have a dial (e.g., potentiometer) with a scale representative of the equivalent weight. Therefore, the user may adjust the dial or set the potentiometer value to a desired weight. The MR actuator 20 would then produce a force on the cable 24 equal to the desired weight. This arrangement is advantageous, in that the MR actuator 20 has a low weight to load ratio (i.e., how much it weighs over the load it can produce) in contrast to the 1:1 weight to load ratio of conventional weightlifting equipment, in which the equipment has weights equivalent to the load. Weightlifting equipment using a MR actuator 20 may thus be much lighter than conventional weightlifting equipment, with the advantages this produces, such as portability.

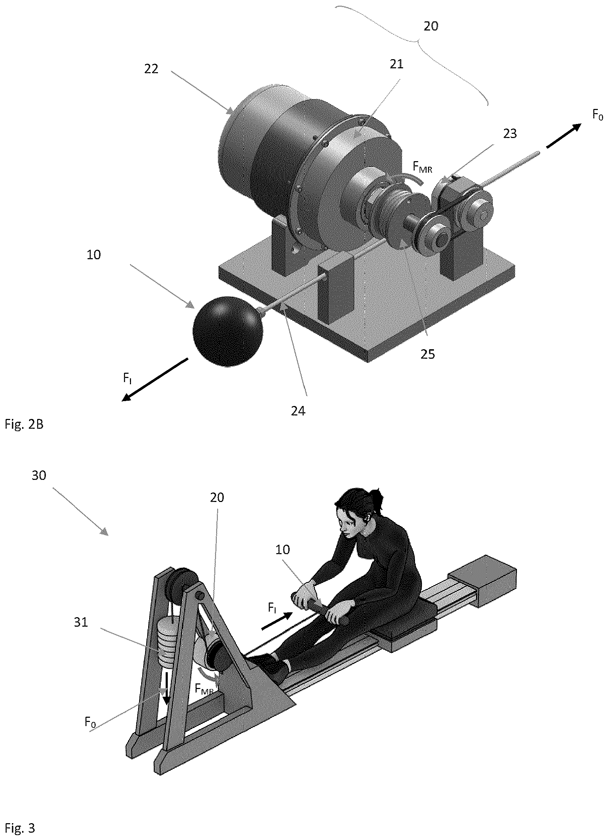

Referring to Fig. 2B, there is illustrated a variation of Fig. 2A representing a system where the user-applied force F_{I} may work against another force source F₀. In the context of a user-applied force F_{I} that is required to work against a force F₀, the MR actuator 20 may feature the MR fluid clutch apparatus 21 used to provide some modulation to the user-applied force F_{I} by transmitting a force F_{MR} from the power source 22, in order to boost or lessen the force required to move the grip 10 relative to the input force i.e., a single degree of modulation, during a training action (e.g., a pulling/pushing stroke and opposite releasing stroke). In this example, the MR force is transmitted to the cable 24 by using a capstan pulley 25 (the modulation interface) but other mechanical transmission means may be used.

Referring to Fig. 3, one example of a training device 30 is a rowing machine incorporating the system of Fig. 2B. The user trains by lifting the weight 31. The vertical movement of the weight 31 is used to train the legs of the user. The MR actuator 20 modulates the training force F_{I} while F₀ remains constant. When the MR actuator 20 does not provide any force, F₀ = F_{I}. However, the legs of the user do not have the same force at all flexing angles. The F_{MR} may hence be varied to adjust the training force F_{I} in function of the position of the legs, to better match the maximum force of the user legs and thus increase the benefit of the training. F_{MR} can also vary in time in order to adjust to the fatigue of the muscles. In normal operation, the training device 30 may calculate the maximum force of the muscle by imposing an isokinetic movement to the handle 10 throughout the span of the training action. Once the measurement at all points is known, the measurement can be inputted in a training program that will train the muscles to the optimal point. The illustrated training device 30 may usually train the muscles in concentric movement (where the muscles on the top of the leg are contracting). With the disclosed arrangement, the training device 30 can also do eccentric training of the same muscles by forcing the bending of the legs. The training device 30 can thus enable both eccentric and concentric training, adapt the training as a function of time and as a function of the user. When the required bandwidth at the transition point (i.e. where the force at the MR fluid clutch apparatus 21 needs to reverse direction) is lower than the combined motor and transmission bandwidth, a single MR actuator 20 can be provided in the training device 30. The reversal of the direction of the force on the training handle may be done by reversing the rotation direction of the motor 22, or by having multiple MR fluid clutch apparatuses 21, to assist both directions of a training action.

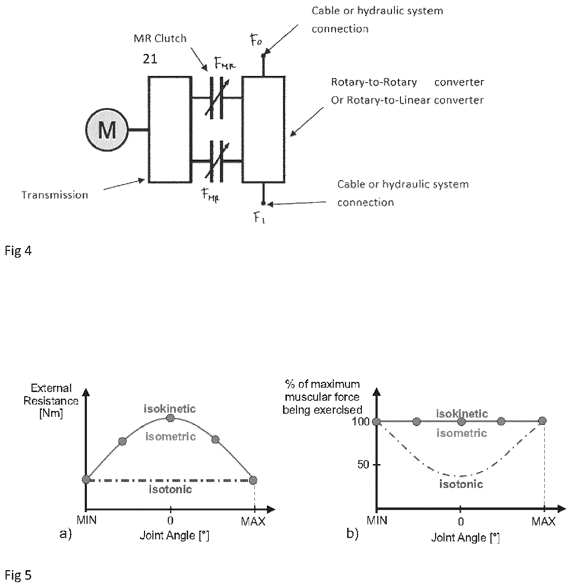

Referring to Fig. 4, a general concept of the present disclosure is shown using a pair of MR fluid clutch apparatuses 21 producing forces F_{MR}, for example in opposite directions, to transmit actuation from the motor M, to user-applied force F_{I} and to output force F_{O}. There therefore results a MR actuator with two antagonistic MR fluid clutch apparatuses 21 (in contrast to the one motor/one MR fluid clutch apparatus of the MR actuator 20). Such a MR actuator with two antagonistic MR fluid clutch apparatuses 21 may be used to provide a bandwidth higher than the one that can be generated by a single MR fluid clutch apparatus 21. A rotary-to-rotary converter or a rotary-to-linear converter may be used to interface the MR fluid clutch apparatuses 21 to the user-applied force F_{I} and to output force F_{O}. The general concept may be without the force F_{O}. In this condition, F_{I} equals F_{MR}.

Referring to Fig. 5, different types of training profiles are illustrated. Fig. 5 demonstrates training in an isokinetic way in contrast to isotonic way. In isotonic training where the load does not vary in function of the bending angle of the joint, the greatest effort at the level of the weakest angle of the muscle. Consequently, when the muscle is at the strongest point, its effort is not optimal. To the opposite, in isokinetic training the speed of the movement is set and is independent of the force provided. The force provided by the muscle can then be maximized at all points. Isokinetic training needs actuators that are controlled in position, independently of the force. An improvement of the isokinetic training technique is to incorporate a variation of speed over the muscle travel as well as change as a function of time. Another improvement of this training technique is to introduce adjustments in function of the human body reaction. Another improvement of this training technique is to add interaction with the body. Another improvement of this training is to integrate interaction with a virtual world. Training techniques will continue to evolve in time as new training devices are created. As training techniques evolve, the actuators involved in training and creating interaction with the human body need to increase in bandwidth.

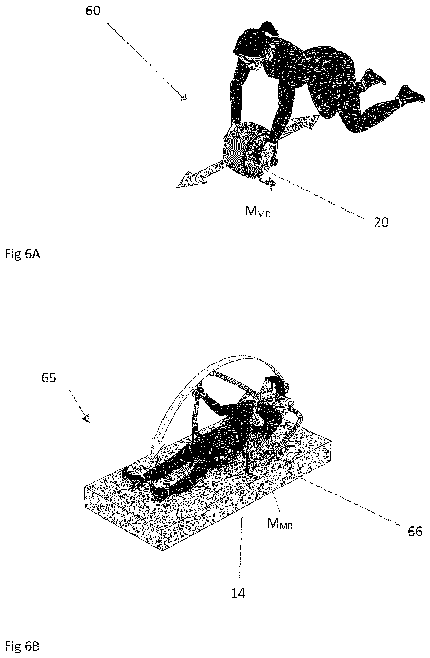

Referring to Fig. 6A, a training device 60 integrating MR actuator 20 is shown and is commonly known as an ab wheel (ab being a common expression used for abdominal muscles), which training device 60 may provide rapid benefits to the user. The ab wheel training may be dangerous. If the body of the person exercising does not control the extension movement of the wheel adequately, the person exercising may rapidly fall on his/her belly or face. The MR actuator 20 in the training device 60 may create a controlled torque M_{MR} defined by a program as a function of other parameters (i.e. speed, travel, reaction force, only to name a few). The torque M_{MR} is then transmitted to the hands of the user via the handle, preventing movement of the wheel in an uncontrolled manner.

Referring to Fig. 6B, there is shown another training device 65 integrating MR actuators (not shown) known as an ab roller. The MR actuator in the base 66 of the ab training device 65 will create a controlled torque M_{MR} and modulate the torque or force required for the body to execute the exercise. The torque M_{MR} may be created by a MR actuator working in torque at a pivot point, like in Fig. 6A or with the use of cable 24 connected to a mechanism. The force or torque may be modulated in order for the user to be able to complete the training and improve the strength of his/her body. As the strength of the user increases, the M_{MR} can be decreased to have no effect on the user or to even increase the load and the force required to execute the exercise.

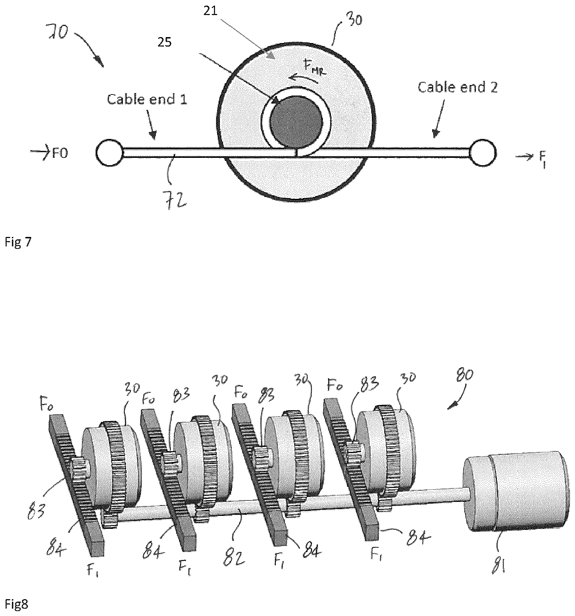

Fig. 7 shows an embodiment for a rotary-to-linear converter 70 that may be used in cable fitness equipment or training devices, to modulate the training force. The system 70 has MR fluid clutch apparatus 21 connected to a capstan 25 so as to selectively transmit force from a power source (e.g., motor) to the user, via cable 72 wound on the capstan 25 in a conventional fashion. User-applied force Fₗ, for example a pulling action, produces an output force F_{O} to displace a load (i.e. weight). In doing so, the friction between the cable 72 and the capstan 25 is such that the capstan 25 rotates as the cable 72 moves axially. The MR fluid clutch apparatus 21 may selectively transmit a rotation force F_{MR} to assist in displacing the load, via the capstan 25. For example, when the manually-actuated system 70 is used as part of a fitness equipment or training device, the speed of displacement of the handle may be monitored, among other possible parameters to be measured, resulting from user-applied force Fₗ. If a deceleration beyond a given level is detected, this may be interpreted as a user force lower than what is required. The MR fluid clutch apparatus 21 may therefore be actuated in controlled slippage to provide its force F_{MR} at a sufficient magnitude to complementarily decrease the effective force, and therefore optimize the training. The above example is one among other examples in which MR fluid modulation may be integrated into fitness equipment. Moreover, as an alternative to the capstan 25, pulleys, racks and pinions, chain and sprockets, hydraulics, pneumatics, etc, could be used as well.

Referring to Fig. 8, a manually-actuated system for multiple input/outputs is generally shown at 80. The manually-actuated system 80 using one power source, motor 81, with a plurality of MR fluid clutch apparatuses 21 mounted to an output shaft 82 receiving the actuation from the motor 81. Each of the MR fluid clutch apparatuses 21 is shown having a pinion 83 meshed to a rack 84, with each rack 84 being part of a manually-actuated system, for example as described in Fig. 1A. Fig. 8 is illustrative of the shared modulation using one single power output to multiple manually-operated systems, and may use other mechanisms for the modulation of the MR fluid clutch apparatus 21, whether it be capstans, pulleys, racks and pinions, chain and sprockets, hydraulics, pneumatics, etc. This configuration would fit particularly well devices in which multiple degrees of modulation are sought for manually-actuated systems.

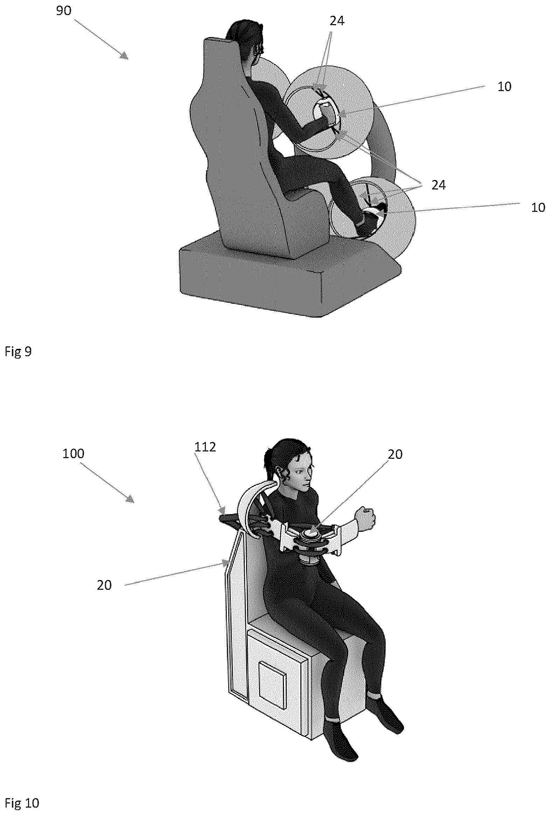

Referring to Fig. 9, there is illustrated another general concept of the present disclosure. In the context of a user-applied force F_{I} on a grip 10 (i.e., handles and/or pedals), MR fluid clutch apparatuses (not shown) may be used to provide some modulation to the user-applied force F_{I} by transmitting a force F_{MR} from a power source (not shown), in order to boost or lessen the force required to move the grip 10 relative to the input force i.e., in more than one degree of modulation. In this example, cables 24 are attached to the grip 10 in order to provide multiple degrees of actuation, hence allowing multiple DOFs. Many grips 10 can be installed on the same apparatus, providing the ability to train independently many parts of the body. The general concept may be used in various applications, such as a fitness system, virtual training devices. In this example, the illustration may be used as a boxing training device 90 that may increase the force required to move the hands of the user as the user's hands come into contact with the opponent in a virtual game.

Referring to Fig. 10, there is illustrated another general concept of the present disclosure. In the context of a user-applied force Fₗ, MR fluid clutch apparatuses may provide some modulation to the user-applied force F_{I} by transmitting a force F_{MR} from a power source, in order to boost or lessen the force required to move some of the body points relative to the input force i.e., in more than one degree of modulation. The general concept may be used in various applications, such as a fitness system, virtual training devices. In this example, a rehabilitation exoskeleton 100 may increase or decrease the force required to move the different body parts of the user as the user's body is submitted to rehabilitation training. MR actuators 20 can be located at the pivot points or remotely, as shown in Fig. 10. If located remotely, the force can be transmitted by using cable or hydraulic conduits 112.

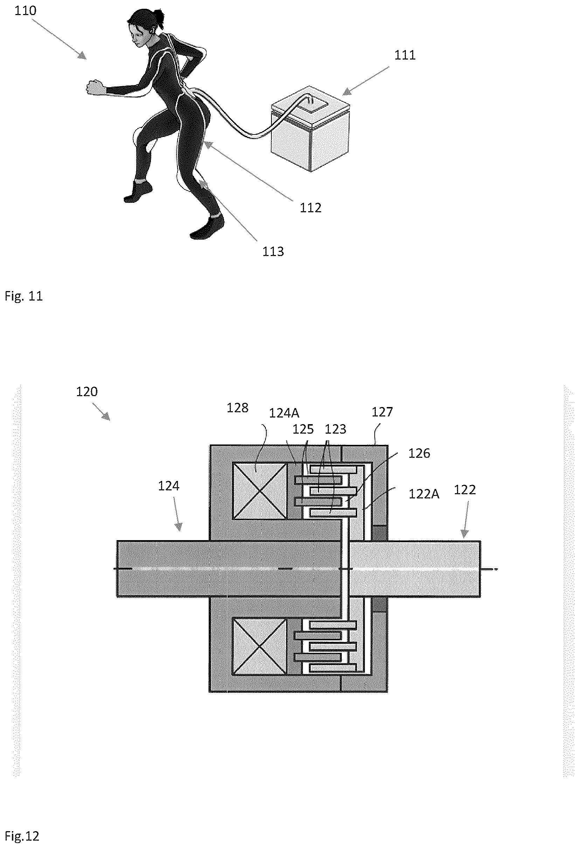

Referring to Fig. 11, there is illustrated another general concept of the present disclosure. In this example, a wearable device 110 increases or decreases the force required to move different body parts of the user as the user's body is submitted to a load in a virtual training device. The MR actuators may be located on the wearable device 110 or may be located remotely in an actuation box 111. The MR actuators can share the same power source, in a similar fashion to the arrangement shown in Fig. 8. The F_{MR} is transmitted to the wearable device 110 using cables or hydraulic tubing 112 in order to reach the force application point or joint. The force on the body parts can be applied using piston or hydraulic muscles 113, only to name a few. Other mechanisms may be used to transmit the F_{MR} to the body parts.

Referring to Fig. 12, there is illustrated a generic magnetorheological (MR) fluid clutch apparatus 120 configured to provide a mechanical output force based on a received input current. The MR fluid clutch apparatus 120 of Fig. 12 is a schematic representation of the MR fluid clutch apparatus 21 used in the training devices described before. The MR fluid clutch apparatus 21 that is used in the MR actuators 20 may have additional components and features, such as redundant electromagnets, MR fluid expansion systems, etc.

The MR fluid clutch apparatus 120 has a driving member 122 with a disk 122A from which project drums 123 in an axial direction, this assembly also known as input rotor. The MR fluid clutch apparatus 120 also has a driven member 124 with a disk 124A from which project drums 125 intertwined with the drums 123 to define an annular chamber(s) filled with an MR fluid 126. The assembly of the driven member 124 and drums 125 is also known as the output rotor. The annular chamber is delimited by a casing 127 that is integral to the driven member 124, and thus some surfaces of the casing 127 opposite the drums 123 are known as shear surfaces as they will collaborate with the drums 123 during torque transmission, as described below. The driving member 122 may be an input shaft in mechanical communication with a power input, and driven member 124 may be in mechanical communication with a power output (i.e., force output, torque output). MR fluid 126 is a type of smart fluid that is composed of magnetisable particles disposed in a carrier fluid, usually a type of oil. When subjected to a magnetic field, the fluid may increase its apparent viscosity, potentially to the point of becoming a viscoplastic solid. The apparent viscosity is defined by the ratio between the operating shear stress and the operating shear rate of the MR fluid comprised between opposite shear surfaces - i.e., that of the drums 123 on the driving side, and that of the drums 125 and of the shear surfaces of the casing 127 in the annular chamber. The magnetic field intensity mainly affects the yield shear stress of the MR fluid. The yield shear stress of the fluid when in its active ("on") state may be controlled by varying the magnetic field intensity produced by electromagnet 128 integrated in the casing 127, i.e., the input current, via the use of a controller. Accordingly, the MR fluid's ability to transmit force can be controlled with the electromagnet 128, thereby acting as a clutch between the members 122 and 124. The electromagnet 128 is configured to vary the strength of the magnetic field such that the friction between the members 122 and 124 is low enough to allow the driving member 122 to freely rotate with the driven member 124 and vice versa, i.e., in controlled slippage. The MR fluid clutch apparatus 120 illustrated in Fig. 12 is of the "normally off type but "normally on" or "partially normally on" type arrangements may also be used. "Normally on" or "partially normally on" type MR fluid clutch apparatuses 120 use a permanent magnet or magnets to generate a magnetic field in the MR fluid when there is no current present in the electromagnet 128. For example, this is described in intermediate document WO2016168934.

The driving member 122 is driven at a desired speed by a power source, like a rotary geared electric motor, and the output rotor is connected to a mechanical device to be controlled. The torque transmitted by the MR fluid clutch apparatus 10 is related to the intensity of the magnetic field passing through the MR fluid. The magnetic field intensity is modulated by a coil 128.

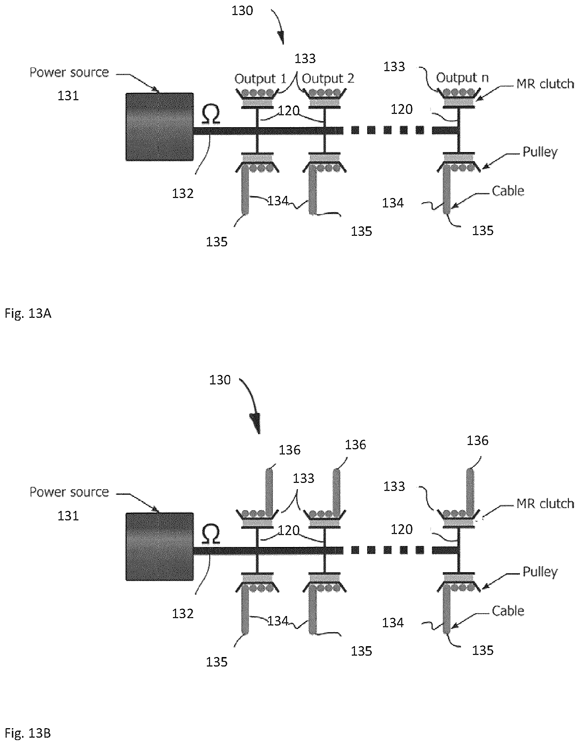

Referring to Fig. 13A, a cable-driven system in accordance with the present disclosure is generally shown at 130. The cable-driven system 130 has *n* MR fluid clutch apparatuses 120 receiving a torque input from a power source 131 via a common power shaft 132 driven by the power source 131. For example, the power source 131 may be an electric motor, although other types of power sources may be used, such as hydraulic motors to name one among numerous other examples.

The MR fluid clutch apparatuses 120 are each equipped with an output wheel 133 upon which is mounted a cable 134. The output wheels 133 are connected to the driven member 124 (Fig. 12) of the MR fluid clutch apparatuses 120 so as to rotate therewith. The expression "output wheel" is used as an encompassing expression for equivalent parts, such as a pulley, a capstan, a chainring, a sprocket, etc. Likewise, the expression "cable" is used as an encompassing expression for equivalent parts, such as a tendon, rope, belt, chain, etc. The selection of the type of cable is based on the type of output wheel. The cable 134 has an end attached to the output wheel 133, a free end 135 attached to an output component, with a length of the cable being wound about the output wheel 133. A rotation of the output wheel 133, for instance as driven by the driven member 124 (Fig. 12), may wound additional cable length onto the output wheel 133, resulting in a pulling action at the free end of the cable 134. A pulling action on the free end 135 may alternatively result in an unwinding of the cable 134 from the output wheel 133, for instance when the MR fluid clutch apparatus 120 is in a slippage condition, i.e., when the pulling action on the free end 135 exceeds the force produced by the driven member 124. The cable-driven system 130 has n outputs for a single degree of actuation. Using continuous-slippage MR fluid clutch apparatuses 120 as tensioners in the cable-driven system 130 allows torque distribution from single power source 131 amongst many outputs in order to drive possibly multiple DOFs. Although the MR fluid clutch apparatuses 120 can only produce torque in the direction they are being driven by the power source, this is not an issue in the case of cable-driven systems because of the cables' intrinsic inability to transmit compressive loads.

Referring to Fig. 13B, there is shown a cable driven system where the output wheels 133 allow another force source to be modulated by the MR fluid clutch apparatuses 120. In this example in which the output wheels 133 are capstans, an outside force source (i.e. free weight) can be attached to the free end 136. In this condition, the effective training force at the free end 135 will be the sum of the input force at the free end 136 and the MR force generated by the MR clutch 120. It is to be noted that the MR force can be of negative or positive sign, decreasing or increasing the effective training force at the free end 135 in relation to the force a the free-end 136. Hence, the embodiment of Fig. 13B is similar to that of Fig. 7, but for multiple outputs for a single degree of actuation.

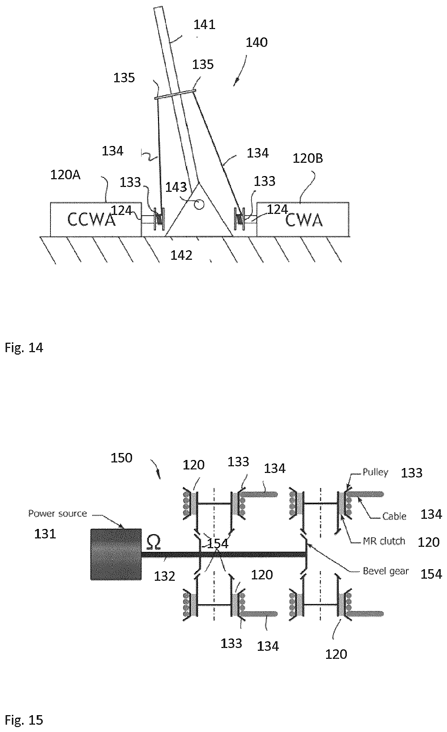

One particular embodiment of the cable-driven system of Fig. 13A or Fig. 13B is shown as 140 in Fig. 14. As the cable-driven training device140 has components in common with the cable-driven system 130 of Fig. 13, like components will bear like reference numerals. The cable-driven system 140 has a pair of the MR fluid clutch apparatuses, one of which is shown at 120Aand the other of which is shown as 120B, the apparatuses 120A and 120B being connected to a common power source (not shown) as is the case for the system 130 of Fig. 13. The MR fluid clutch apparatuses 120A and 120B are connected via cables 134 to a common end effector 141 used for training. The common end effector 141 is illustrated as being a pivoting arm, mounted to a base 142 by pivot 143. Accordingly, the end effector 141 is movable in one rotational degree of freedom (DOF). In spite of being driven by the common power source, the MR fluid clutch apparatuses 120A and 120B provide antagonistic pulling actions on the end effector 141, to enable reciprocating training. Also, although the end effector 141 is shown as being movable in one rotational DOF, the end effector 141 could be connected to the base 142 by a translation joint, whereby the system 140 would provide a translational DOF. It is also considered to provide a single MR fluid clutch apparatus 120 and thus a single cable 134 connected to the end effector 141, with an antagonistic force provided by a biasing member such as a spring, gravity, etc (not shown). This is applicable for given embodiments provided below as well.

In typical antagonistic cable-driven training systems, one actuator per degree-of-freedom (DOF) is generally used. Each actuator must therefore be designed to satisfy the maximum load for the degree-of-freedom it is driving. In the proposed embodiment, the DOF is actuated by two actuators because of the cables' inability to transmit compressive loads. Each DOF is hence actuated by two antagonistic MR actuators and generally only one is being activated at the time because of their opposing effect. For example, if a load is required to be produced in the clockwise direction, a clockwise MR actuator (CWA) is powered and the counterclockwise MR actuator (CCWA) is unpowered and vice-versa if the load is required to be produced in the other direction.

In contrast, when centralizing the power source 131 (Fig. 13) in the training device 140 of Fig. 14, the resulting system may lead to a compact and lightweight design. Moreover, since the continuous-slippage MR fluid clutch apparatuses uncouple the inertia of the power source 131 from the end effector 141, a lightweight power source, such as a high-speed electric motor coupled with a high-ratio reduction gearbox can be used without impacting the system's dynamic performance. Furthermore, the required load for the power source 131 can be tailored according to the application, leading to further weight reduction. For example, as the cable-driven training device 140 utilizes a purely antagonistic actuation arrangement, the power source 131 is not required to produce the sum of the load capacity of both continuous-slippage MR fluid clutch apparatuses 120 it is driving, since only one of each pair can be active at the same time. The power source 131 can therefore be designed for a load slightly higher than the load capacity of one MR fluid clutch apparatus (i.e., the "offstate or free state" power of the clutch apparatus in slippage being greater than zero). This principle applies not only in the case of antagonistic architectures but it also applies in any application where multiple outputs do not need to be actuated simultaneously at their maximum load. This is the case in training where not all the muscle can exert a force simultaneously. Usually, the muscles are training in one direction, then the other, repeatedly (i.e. the muscle of the arm cannot bend and extend simultaneously).

When maintained in slippage and used with a geared motor as power source 131, the MR fluid clutch apparatuses 120 in the cable-driven training device 140 decouple the dynamic behavior of the motor from the outputs resulting in a low output inertia and high control quality since the high output inertia of the geared motor 131 is not reflected at the system output. The cable-driven training device 140 may also provide increased force accuracy as the non-linear behaviors of the geared motor (e.g. cogging, gear backlash, friction) are filtered by the MR fluid clutch apparatuses. The cable-driven training device 140 also has low mass and a reduced number of components since loads generated by a common geared motor 131 can be shared between a plurality of outputs. In some applications, the cable-driven training device 140 may be reliable as a faulty geared motor can be disconnected from the output following clutch disengagement, when a redundant motor is available as back-up.

Referring to Fig. 15, yet another embodiment using the concepts of the cable-systems 130 and 140 is illustrated at 150. As the cable-driven system 150 has components in common with the cable-driven system 130 of Fig. 13, like components will bear like reference numerals. The cable-driven training device 150 has a four of the MR fluid clutch apparatuses 120. The MR fluid clutch apparatuses 120 are connected to a common power source 131. The force is distributed to the n MR fluid clutches apparatuses 120 using bevel gear 154.

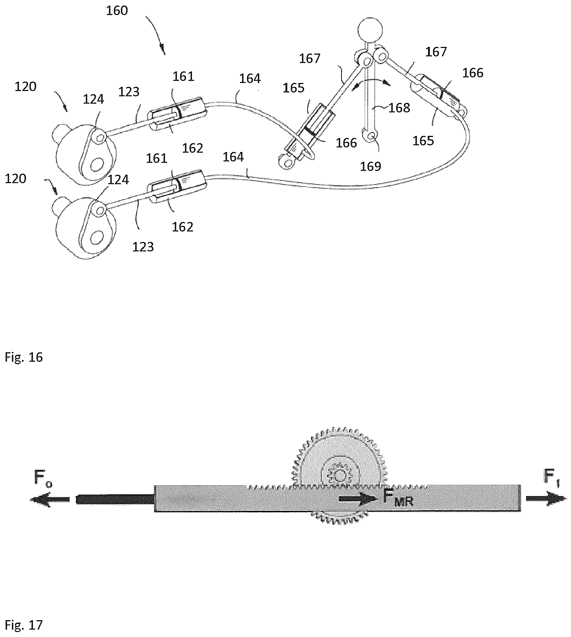

Referring to Fig. 16, a training device operated with a similar antagonistic approach is shown at 160. However, instead of cables, the system 160 is using fluid pressure to actuate movements of an output. In the illustrated embodiment, the system 160 has a pair of MR fluid clutch apparatuses 120 which, although not shown, may receive power from a common power source, for instance as in Fig. 13 or in Fig. 15. However, for simplicity, the power source and associated transmission is not illustrated in the Fig. 16. The driven member 124 of each MR fluid clutch apparatus 120 is an arm pivotally connected to a piston 161 of a cylinder 162, by way of a rod 163. The system 150 may further have a flexible conduit 164 extending from the cylinder 162 to another cylinder 165. This other cylinder 165 has a piston 166 and its rod 167 pivotally connected to an output 168 pivotally mounted to a ground at pivot 169.

In operation, the actuation of one of the MR fluid clutch apparatuses 120 results in movement of its associated piston 161 in the respective cylinder 162. Pressurized fluid may as a result travel from the cylinder 162, through the conduit 164, and into the other cylinder 165. This will cause a movement of the piston 156 that will push the output 168. The actuation of the other of the MR fluid clutch apparatuses 120 may result in a reciprocating movement of the output 168, in this illustrated embodiment of one rotational DOF.

Accordingly, the system 160 operates in a similar antagonistic approach as the systems 130, 140 and 150 yet with a pushing action (compressive load) instead of a pulling action (tensioning load) as when cables are used. The system 150 may be arranged to provide additional degrees of freedom of output, for example with an arrangement similar to that of Fig. 15. As an alternative to the presence of two MR fluid clutch apparatuses 120 in Fig. 16, the system 160 may use other forces to perform the antagonistic opposition, such as a spring, gravity, etc.

It is to be noted that both conduits could be plugged in different chambers of a same piston body, at the input or the output, the antagonistic opposition being applied on the piston, the rod transmitting the force to the end effector.

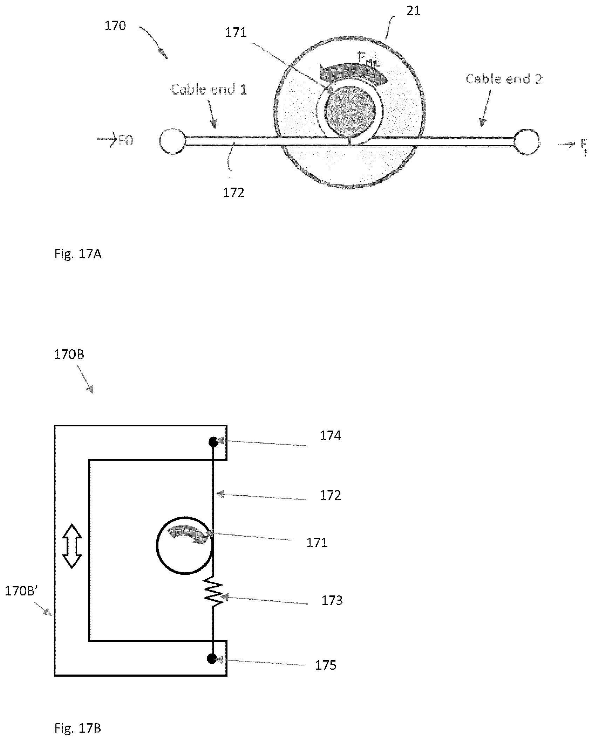

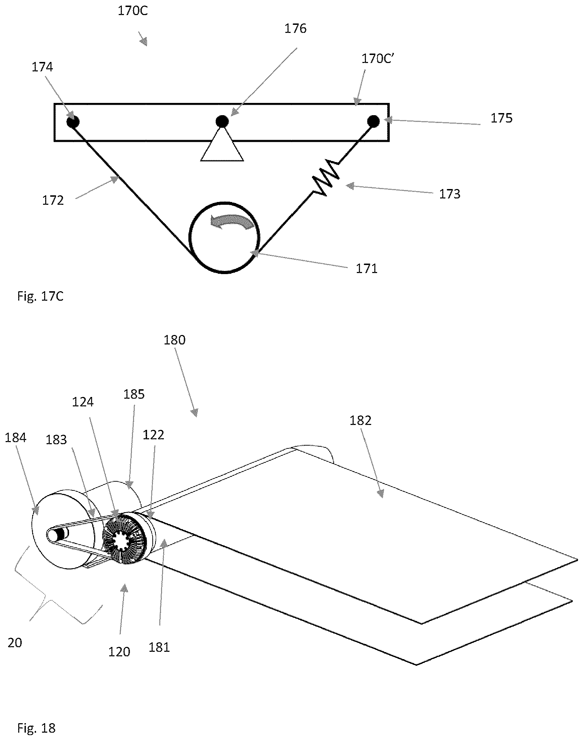

Referring to Fig. 17, there is illustrated a general concept of the present disclosure. In the context of a user-applied force F_{I} to overcome a force F_{O}, a magnetorheological (MR) fluid clutch apparatus may be used to provide some modulation to the user-applied force F_{I} by transmitting a force F_{MR} from a power source, in order to boost or lessen the force F_{O} relative to the input force, i.e., a single degree of assistance. In doing so, the force transmission may benefit from the characteristics of MR fluid clutching such as a high capacity to reduce or increase the force or pressure from the input to the output, a low output inertia for high dynamic response, a high bandwidth for high dynamic response. Using MR actuators with these features allows viable and performing controlled force or pressure systems and actuation systems. MR actuator technology operates at a bandwidth that is higher than human body muscles and with better force-to-weight ratio, whereby it is desirable to combine with cable, hydraulic, pneumatic transmission of manual actuation. The general concept may be used in various applications, such as fitness systems.

Referring to Fig. 17A, there is illustrated a tensioning mechanism 170 that may be used to maintain tension in a cable of the previous mechanisms featuring a cable. The tensioning mechanism 170 may also provide biasing force on the non-active side of a cable when necessary. The system 170 has an MR fluid clutch apparatus 21 connected to a capstan 171 so as to selectively transmit force from a power source (e.g., motor) to a mechanism, via cable 172 wound on the capstan 171 in a conventional fashion. Capstan 171 may also be replaced by a common pulley, while cable 172 would be replaced by a pair of cable segments, both cable segments attached to the common pulley 171. Biasing force Fₗ, for example a pulling action from a spring (not illustrated) or other biasing source, produces an output force F_{O} to displace a load. In the case of two antagonist MR actuators used to move one DOF as in cable-driven system 140 (Fig. 14), the MR fluid actuator 120A may be linked to the MR fluid actuator 120B via cable ends 2 (Fig. 17A) in order to "reel" the cable of antagonist movement. The cable end 2 of MR fluid actuator 120A may also be linked to the cable end 2 of MR fluid actuator 120B using a spring between them in order to cope with the small length variations that may happen during the movement. Routing between the cable end 2 of MR fluid actuator 120A and the cable end 2 of MR fluid actuator 120B may be indirect and guided by various devices or achieved using various linkages. In some cases, load may be the cable weight alone. In such a case, the friction between the cable 172 and the capstan 171 is such that the capstan 171 rotates as the cable 172 moves axially. The magnetorheological fluid clutch apparatus 21 may selectively transmit a rotation force F_{MR} to assist in displacing the load, via the capstan 171. This type of tensioning device may present advantages in some devices that may be actuated when powered off, or in devices where the MR clutch apparatus may only provide movement in one direction. For example, if the manually-actuated system 170 is used as part of a fitness equipment and the actuator is forced to move by an outside force (i.e. a human) when the system is powered off, mechanism 170 may "reel" the cable to prevent cable loosening situation on cable end 1 (Fig. 17A). The above example is one among other examples in which a tensioning mechanism may be integrated in a strength training device, to prevent cable loosening. In addition, when only cable end 1 is present (Fig. 17A), a tensioning device (e.g., a torsion spring among numerous examples) may be acting directly on the pulley 171 in order to prevent cable end 1 from loosening. Moreover, as an alternative to the capstan 171, pulleys, racks and pinions, chain and sprockets, hydraulics, pneumatics, etc, could be used as well.

Referring to Fig. 17B, there is illustrated a mechanism 170B similar to 170 described in Fig. 17A with the difference that there is provided a reciprocal movement that prevents cable end 1 from loosening at the same time as limiting the required change of length for tensioning element 173. With the proposed tensioning device, cable end attachment point 174 may travel a distance while cable end attach point 175 travels a similar distance, limiting the change of length of tensioning element 173. Member 170B' may translate under a force generated by the MR clutch apparatus 21 (not illustrated) connected to the capstan or pulley 171. Manual actuation of the member 170B' while mechanism 170B is powered off may happen while tension in the cable 172 is maintained and the cable 172 may not become loose. In some conditions, tensioning element 173 may be the elasticity of the cable 172 itself.

Referring to Fig. 17C, there is illustrated a mechanism 170C similar to 170B described on Fig. 17B with the difference that the movement is not a translational movement, but is instead a rotational movement of member 170C' around a pivot 176. Member 170C' may rotate under a force generated by the MR clutch apparatus 21 (not illustrated) connected to the capstan or pulley 171. External force applied on the member generating a movement of member 170C' will not create loosening of the cable 172 when the change of length of the tensioning element 173 may cope with the change of length of cable 172.

Referring to Fig. 18, there is illustrated a resistance training apparatus 180. This type of apparatus includes, only to name a few, a powered treadmill, a strength treadmill, elliptical machines, exercise cycles, step trainer, stair trainer, curved treadmill. As an example for this list of apparatus configurations, and for simplicity, the function of the MR fluid clutch apparatus 120 will be described in relation to the resistance training apparatus 180 taking the form of a power treadmill, in which the user must force to have the treadmill move. In the treadmill 180, a rotating device 181 is in rolling engagement with the component in contact with the user, namely the exercise surface 182 (e.g., a belt, plastic components or a plurality of strips). The force generated by the user on the exercise surface 182 may be transmitted to the rotating device 181 converting the potential energy of the user on the physical exercise surface 182 into rotational kinetic energy. The rotating device 181 may be secured to the driving member 122 of the MR fluid clutch apparatus 120 (Fig. 12). The driven member 124 of the MR fluid clutch apparatus 120 may then be connected to a belt used to transmit load to a power device 185. The power device 185 may be a brake, such as an electromagnetic brake, permanent magnet brake, powered pneumatically, hydraulically, or electrically (e.g., electrical motor/generator). A reduction mechanism, such as belt 183, is shown here but the braking device 185 may be connected directly to the driven member 124 or may be connected using any other reduction mechanism (e.g., gearbox, hydraulic pump...). In some applications, an inertial wheel may be added to the power device 185 in order to maintain a more constant speed of the power device 185 in the presence of force variation induced by the user to the system. When connecting a MR fluid clutch apparatus 120 between the rotating device 181 and the power device 185, the arrangement is essentially a MR actuator 20 and the exercise force may benefit from the characteristics of MR fluid clutching such as a high capacity to reduce or increase the force or pressure from the input to the output of the MR fluid clutch apparatus 120, a low output inertia for high dynamic response, hence a high bandwidth. The MR fluid clutch apparatus 120 works to adjust the force output by the rotating device 181 as a function of the gait of the walker on the exercise surface 182 MR actuator technology operates at a bandwidth that is higher than human body muscles and with better force-to-weight ratio, whereby it is desirable to combine MR actuators such as the MR actuator 20 with the exercise surface 182 that has a low inertia. With the high bandwidth response of the MR fluid clutching, the MR actuator 20 may change the resistance of the exercise in real time in order to enable isokinetic training or other type of training. The MR actuator 20 may also switch the treadmill 180 from strength training in which the user may provide high force to the exercise surface 182, to a free running condition in which the user provides lower force to the exercise training surface 182. Sensors (not illustrated) (e.g., torque sensor, force sensor or speed sensors, only to name a few) may be added in order to improve the precision and control of the input of the MR actuator 20.

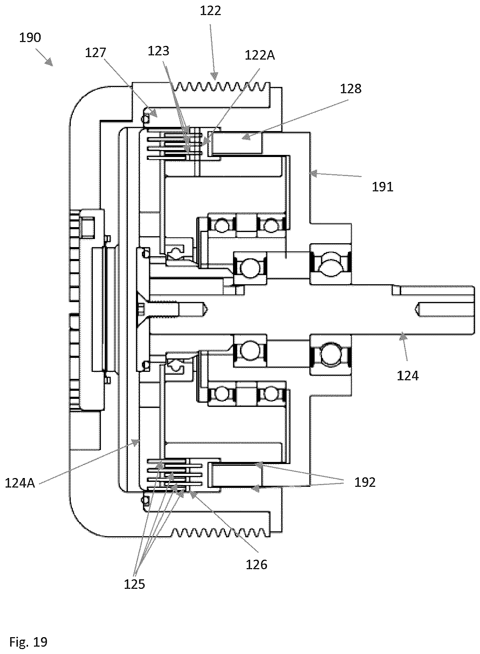

Referring to Fig. 19 is shown a schematic of a MR clutch apparatus at 190 that may be used on the exercise equipment 180 of Fig 18. For simplicity reasons, the MR fluid clutch apparatus 190 represented here is of the "normally open" type. However, a MR clutch apparatus that is normally closed may be used. The MR fluid clutch apparatus 190 shown in Fig. 19 is similar to the MR fluid clutch apparatus 120 of Fig. 12 with the difference that the MR fluid clutch apparatus 190 has a fixed part 191 that may be mounted to a fixed chassis (not illustrated). The electromagnet 128 is attached to the fixed part 191 and two non-Mr fluid gaps 192 (e.g., air gaps) allow the input rotor 127 to turn freely. On the MR fluid clutch apparatus 190, the driving member 122 (Fig. 12) may be receive an input using a belt (not illustrated) or like transmission connected to a torque source (e.g., a motor).

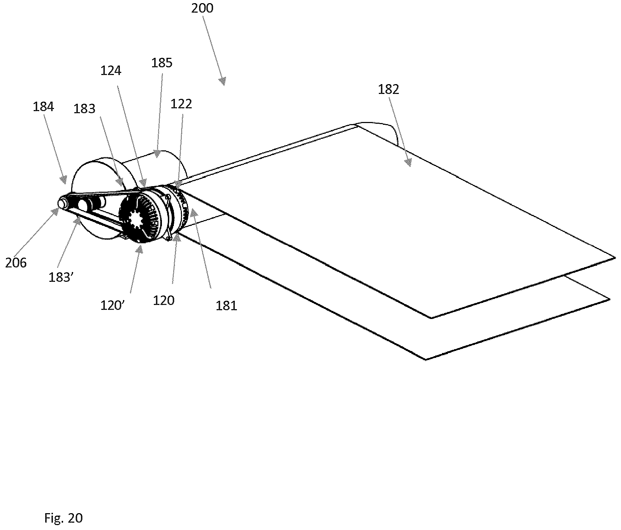

Referring to Fig. 20, there is shown a resistance training device 200 similar to the one of Fig 18, with a second MR clutch apparatus 120' turning in the opposite direction than the first MR clutch apparatus 120. MR fluid clutch apparatus 120 may turn in CW direction while MR fluid clutch apparatus 120' is turning in CCW direction. The opposite turning direction is transmitted with a second belt 183' that is connected to the same power device 185 by way of a rotation converter 206. Other types of rotation converters may be used, such as gear arrangements. The MR fluid actuator of Fig. 20 with two MR clutch apparatuses 120 that rotate in opposite directions presents the advantage that it may stop the exercise surface 182 faster than if only one MR fluid clutch apparatus were used, as in Fig, 18. This feature may be useful to brake the exercise surface 182 rapidly in case of emergency. Also, if the braking device 185 is a motor, the exercise surface 182 may be driven in alternative directions with high bandwidth. This behaviour may be useful to achieve equilibrium training.

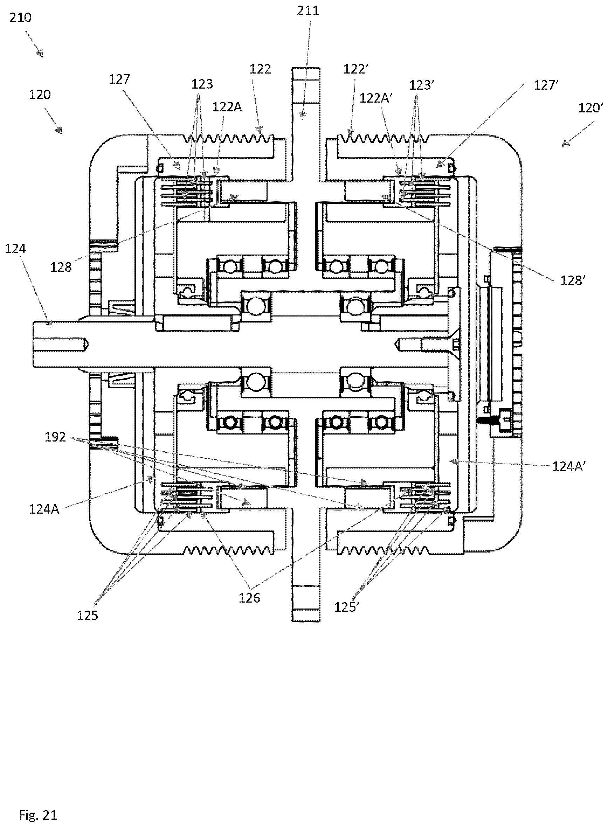

Referring to Fig. 21, there is shown a combination of MR clutch apparatus 120 and 120' that may be used with exercise equipment 200 of Fig. 20. For simplicity reasons, the MR clutches apparatuses 120 and 120' represented here are of the normally open type. However, one or more MR clutches apparatuses may be of the closed type. A fixed component 211 may be mounted to the chassis of the equipment (not illustrated) in order to prevent rotation. The fixed component 211 may be part of both MR fluid clutch apparatuses 120 and 120'. The fixed component 211 may support both electromagnets 128 and 128'. As described for Fig. 20, the MR fluid clutch apparatus 120 may turn CW while MR fluid clutch apparatus 120' may turn CCW. The MR fluid clutch apparatuses 120 and 120' may receive power from belts (not illustrated) connected to the driving members 122 and 122'. Power to the MR fluid clutch apparatuses 120 and 120' may be provided by any type of mechanism as long as driving members 122A and 122A' turn in opposite directions. Force or movement of the output shaft 124 in both CW and CCW directions may be obtained by controlling the operation of MR fluid clutch apparatuses 120 and 120', both transmitting force or movement to the common output shaft 124.

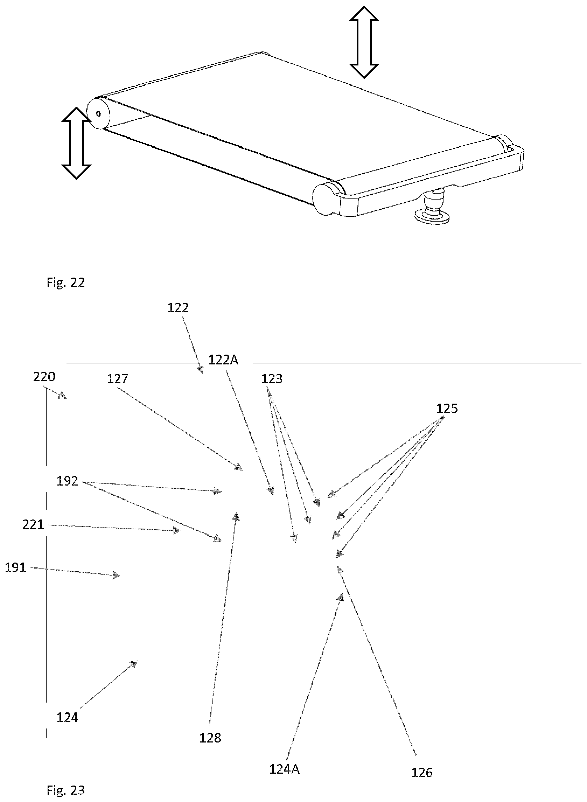

Referring to Fig. 22, there is shown a resistance training device similar to the one of Figs. 18 and Figs. 20, in which the power device 185 is a motor that also powers at least one other degree of freedom, namely the variation of the incline. In the exercise equipment of Fig. 22, the controlling of the additional degree of freedom may simulate the variable terrain that may be encountered outside, hence increasing the realism of the exercise training equipment.

Referring to Fig. 23, there is shown the schematic a MR fluid clutch apparatus 220 of normally closed type that may be used to replace any of the MR fluid clutch apparatus that are used in the previous applications. In the normally closed type of MR fluid clutch apparatus 220, the magnetic field is at least partially created by a permanent magnet 221 supported by the fixed part 191. For example, this is described in intermediate document WO2016168934.

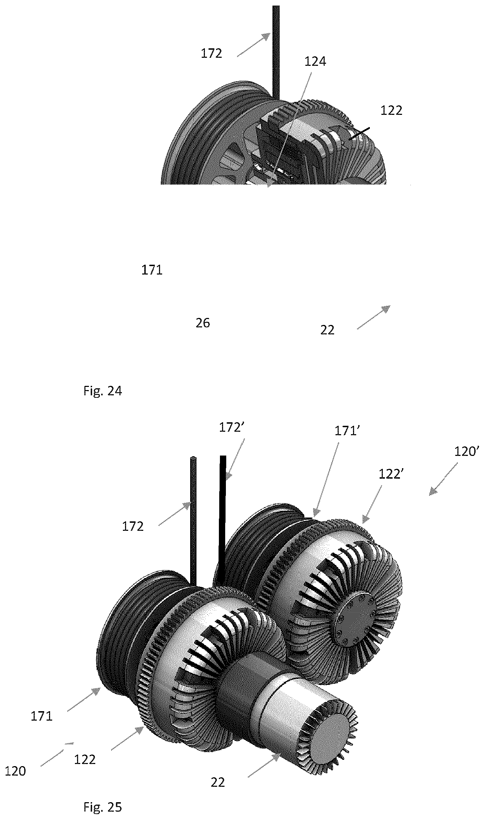

Referring to Fig. 24, there is shown a MR fluid actuator similar to that Fig 2A, and that may hence be used in exercise equipment that is cable operated, and in which only one degree of actuation may be desired. The power source 22 is connected to the input member 122 while the pulley 171 is connected to the output shaft 124. The power transmission between the input member 124 and the output shaft 124 may be achieved by using the MR fluid 26. In some mode of operation, a user may pull on cable 172 and then the MR fluid clutch apparatus may brake the movement of the user, creating a resistance force. In such a mode of operation, motor 22 may be used as a dynamo and hence convert energy into electricity. Power may then flow from the output shaft 124 to the motor 22. The level of torque between the output shaft 124 and the motor 22 may be controlled by modulating the apparent viscosity of the MR fluid 26 present in the MR fluid clutch apparatus. When the system functions with energy flowing from the output shaft 124 toward the input member 122, the input of power to the system is achieved by the output shaft 124 and the output of power may be achieved by the input member.

Referring to Fig. 25, there is shown a cable MR fluid actuator similar to the one of Fig. 24 but with at least one additional degree of actuation. The MR fluid actuator may have multiple degree of actuation acting on one or more degrees of freedom. Multiple MR fluid clutch apparatuses 120 and 120' may receive power from a shared motor 22. Power may be distributed from MR fluid clutch apparatus 120 to other MR fluid clutch apparatus 120' using mechanical connection between the input member 122 of MR fluid clutch apparatus 120 and the input member 122' of MR fluid clutch apparatus 120'. Gear connection is illustrated in Fig. 23 but other type of mechanical connections may be used. In the MR fluid clutch actuator of Fig. 25, the input member 122 and 122' rotate in opposite directions because they are directly connected to one another using a gear, whereby the pulling cables are connected on one side of pulley 171 and on the other side for the pulley 171'.

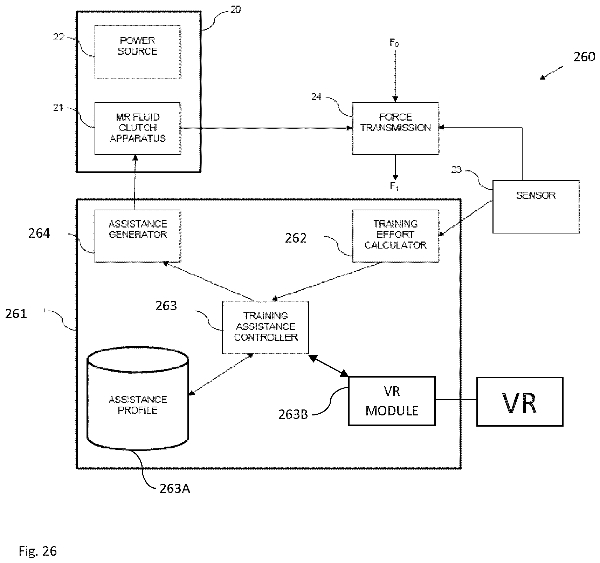

Referring to Fig. 26, a system for assisting a user in strength training with any one of the previously described embodiments of the training devices is shown at 260. The system 260 therefore includes the MR actuator 20, for the MR fluid clutch apparatus(es) 21 having the input coupled to the torque source 22 to receive torque therefrom. The system 20 ensures that the MR fluid clutch apparatus(es) 21 is controlled to transmit a variable amount of torque via an output thereof. The modulation interface, such as a pulley or capstan, couples the MR fluid clutch apparatus(es) 21 to the force transmission 24 of the training device. The system has sensor(s) 23 for providing information indicative of a training action by the user. Any type of sensor 23 may be used, for instance to measure a speed of the force transmission 24 or of any part of the training device, a distance travelled by the force transmission, and/or a tension in the force transmission 24 or on any part of training device. A training processor unit 261 has a processor for obtaining the information from the sensors 23, and for consequently controlling the MR actuator 20 as a function of a level of force assistance that it determines. The training processor unit 261 has a training effort calculator module 262 receiving the information indicative of the training action from the sensors 23, and for characterizing the training action. For example, the training effort calculator module 262 may calculate an instant speed, a current position of the force transmission 24, a tension in the force transmission 24, depending on the type of sensors 23 used. The training effort calculator module 262 may detect a speed and/or a deceleration beyond a predetermined threshold from the information indicative of the training action to cause a reduction of force transmitted the user.

A training assistance controller module 263 determines a level of force assistance from the characterizing of the training action by the training effort calculation module 262. Numerous examples of assistance patterns or profiles have been described above. For example, the training assistance controller 263 may record the characterizing of the training action over a full cycle of the training action. This may include a total distance of travel, a speed variation profile, a force variation profile, among examples. The training assistance controller module 263 may then define an assistance profile for the full span of the training action, to determine the level of force assistance as a function of the assistance profile. By way of example, the assistance profile may be configured to convert the training action into an isokinetic training action, over the full movement cycle. The assistance profile may also be configured to increase the level of assistance force exerted on the transmission 24 as the number of repetitions of the training action increases, i.e., over time. The assistance profiles may be part of a database 263A. The assistance profile may also be generated by a virtual reality training environment module 263B that is in communication with a virtual training environment VR. Information may be exchanged between the training assistance controller module 263 and the virtual training environment module 263B that may also be linked with a visual interface (e.g., Oculus Rift™ or other personal display) for the assistance controller module 263 to determine the appropriate assistance level to be provided by the MR actuator 20 for the force to be synchronized with an event occurring in the virtual world. Therefore, the virtual reality training environment module 263B provides data representative of virtual reality characteristics impacting the training action, i.e., virtual reality assistance indication or profile. The training assistance controller module 263 may then determine the assistance level for the user to be exposed to forces representative of the virtual environment, based on the virtual reality assistance indication. The combination of a visual event that may occur in the virtual world and a physical event that may happen in the physical world may generate a good immersion of the user and increase his/her willingness of performing physical activities. By way of example, in the case of a treadmill 180 (Fig. 18), the virtual environment VR may be trail running on mountainous terrain. The MR fluid clutch apparatuses 120 may be used to emulate the condition of the terrain, e.g., slope, slippery or dry soil, which condition of the terrain is the virtual reality assistance indication. The virtual environment may be substituted or may include in some cases by a remote connection (i.e. cable or Internet) between 2 users training simultaneously and where reciprocal actions may be required between the two users. In other words, the virtual environment enables a competition or confrontation between the remote participants. The virtual reality assistance indication or profile would hence be representative of the forces provided by the other party or parties partaking in the virtual reality session.

An assistance generator module 264 may then control the MR actuator 20 in exerting the level of force assistance on the force transmission of the training device to assist the user in the training action, based on the determination made by the training assistance controller module 263. The assistance generator module 264 may maintain the MR fluid clutch apparatus 21 in a slippage mode for the force transmission to transmit force to the user without assistance from the at least one MR fluid clutch apparatus 21.

The training processor unit 261 of the system 260 may therefore include a set of non-transient machine executable instructions to perform a method for assisting a user in strength training, in which information is obtained and is indicative a training action of a user on a force transmission of a strength training device; the training action is characterized from the information; a level of force assistance required to assist the user in the training action is determined from the characterizing; at least one MR fluid clutch apparatus is controlled to transmit force to the force transmission of the training device to exert the force assistance on the force transmission of the training device to assist the user in the training action.

The method may also include: obtaining information indicative the training action comprises obtaining at least one of a speed of the force transmission, a distance of travel of the force transmission, and a tension on the force transmission; measuring the information; detecting at least one of a speed and a deceleration beyond a predetermined threshold; reducing a force transmitted the user; recording the characterizing of the training action over a full span of the training action, defining an assistance profile for the full span of the training action, and determining the level of force assistance as a function of the assistance profile; converting the training action into an isokinetic training action over the full span of the training action; increasing the level of assistance over an increase of repetitions of the full span; and/or performing the method on opposite directions of the training action in a repetition, and wherein controlling at least one MR fluid clutch apparatus to transmit force to the force transmission of the training device comprises controlling two said MR fluid clutch apparatuses to exert force assistance in the opposite directions of the repetition.

## Claims

1. A system for assisting a user in strength training with a strength training device (30) comprising:
at least one torque source (22);
at least one magnetorheological (MR) fluid clutch apparatus (21) having an input coupled to the at least one torque source (22) to receive torque from the at least one torque source, the MR fluid clutch apparatus controllable to transmit a variable amount of torque via an output thereof;
a modulation interface coupling the output of the at least one MR fluid clutch apparatus to a force transmission (24) of the training device (30);
at least one sensor (23) for providing information indicative of a training action by the user;
and
a training processor unit (261) comprising at least a training effort calculator module (262) for receiving the information indicative of the training action and for characterizing the training action, a training assistance controller module (263) for determining a level of force assistance from the characterizing of the training action, and an assistance generator module for controlling the at least one MR fluid clutch apparatus (21) in exerting the force assistance at said level on the force transmission of the training device to assist the user in the training action at a bandwidth that is higher than human body muscles.

2. The system according to claim 1, wherein the training effort calculator (262) characterizes the training action by measuring at least one of a speed of the force transmission, a distance of travel of the force transmission, and a tension on the force transmission.

3. The system according to claim 1, wherein the training assistance controller (263) records the characterizing of the training action over a full span of the training action, and defines an assistance profile for the full span of the training action, wherein determining the level of force assistance is as a function of the assistance profile.

4. The system according to claim 3, wherein the assistance profile comprises converting the training action into an isokinetic training action over the full span of the training action.

5. The system according to any one of claims 3 and 4, wherein the assistance profile comprises increasing or decreasing the level of assistance over an increase of repetitions of the full span of the training action.

6. The system according to any one of claims 1 to 5, wherein the modulation interface has a gear meshed to a rack, the rack configured to be connected to an end of at least one cable of the force transmission.

7. The system according to any one of claims 1 to 5, wherein the modulation interface has a capstan (25), a cable (72) of the force transmission wound onto the capstan.

8. The system according to any one of claims 1 to 5, wherein the modulation interface has a pulley (25) being connected to ends of cables of the force transmission.

9. The system according to any one of claims 1 to 5, wherein the modulation interface is connected to an exercise surface of a treadmill, the exercise surface being the force transmission.

10. The system according to any one of claims 1 to 9, wherein the at least one MR fluid clutch apparatus is coupled to the force transmission by the modulation interface such that the at least one MR fluid clutch apparatus transmits torque to reduce a force of the training action on the user.

11. The system according to any one of claims 1 to 10, wherein the assistance generator module (264) maintains the at least one MR fluid clutch apparatus in a slippage mode for the force transmission to transmit force to the user without assistance from the at least one MR fluid clutch apparatus.

12. The system according to any one of claims 1 to 11, wherein the training effort calculator module (262) detects at least one of a speed and a deceleration beyond a predetermined threshold from the information indicative of the training action, and the assistance generator module (264) controls the at least one MR fluid clutch apparatus to reduce a force transmitted to the user.

13. The system according to any one of claims 1 to 12, comprising a plurality of the MR fluid clutch apparatus each associated with a respective modulation interface, and further comprising a single one of the torque source (22), the input of each of the plurality of the MR fluid clutch apparatuses commonly connected to the single one of the torque sources, and further wherein two of the plurality of MR fluid clutch apparatuses are optionally coupled to a common force transmission, the two MR fluid clutch apparatuses exerting force assistance on opposite directions of movement of the training action.

14. The system according to any one of claims 1 to 13, wherein the training processor unit (261) further comprises a virtual reality training environment module providing a virtual reality assistance indication to the training assistance controller module (263), the training assistance controller module determining the level of force assistance as a function of the virtual reality assistance indication.

15. A strength training apparatus comprising:
the system according to any one of claims 1 to 14;
at least one user interface adapted to be manually handled during a training action;
a force transmission connecting the at least one user interface at least to the modulation interface to transmit force between the at least one user interface and the modulation interface.

## Patentansprüche

1. System zum Unterstützen eines Benutzers bei Krafttraining mit einer Krafttraining-Vorrichtung (30), umfassend:
wenigstens eine Drehmomentquelle (22);
wenigstens eine magnetorheologische (MR) Fluid-Kupplungsvorrichtung (21) mit einem Eingang, welcher mit der wenigstens einen Drehmomentquelle (22) gekoppelt ist, um ein Drehmoment von der wenigstens einen Drehmomentquelle zu erhalten, wobei die MR-Fluid-Kupplungsvorrichtung dazu steuerbar ist, eine variable Menge an Drehmoment mittels eines Ausgangs davon zu übertragen;
eine Modulationsschnittstelle, welche den Ausgang der wenigstens einen MR-Fluid-Kupplungsvorrichtung mit einer Kraftübertragung (24) der Trainingsvorrichtung (30) koppelt;
wenigstens einen Sensor (23) zum Bereitstellen von Informationen, welche eine Trainingshandlung durch den Benutzer anzeigen; und
eine Training-Prozessoreinheit (261), welche wenigstens ein Trainingsleistung-Berechnungsmodul (262) zum Empfangen der Informationen umfasst, welche die Trainingshandlung anzeigen, sowie zum Charakterisieren der Trainingshandlung, ein Trainingsunterstützung-Steuermodul (263) zum Bestimmen eines Niveaus einer Kraftunterstützung aus der Charakterisierung der Trainingshandlung, und ein Unterstützung-Erzeugungsmodul zum Steuern der wenigstens einen MR-Fluid-Kupplungsvorrichtung (21) beim Ausüben der Kraftunterstützung bei dem Niveau an der Kraftübertragung der Trainingsvorrichtung, um den Benutzer bei der Trainingshandlung bei einer Bandbreite zu unterstützen, welche höher als menschliche Körpermuskeln ist.

2. System nach Anspruch 1, wobei der Trainingsleistung-Berechner (262) die Trainingshandlung charakterisiert, indem wenigstens eines aus einer Geschwindigkeit der Kraftübertragung, einer Distanz einer Strecke der Kraftübertragung und einer Spannung an der Kraftübertragung gemessen wird.

3. System nach Anspruch 1, wobei die Trainingsunterstützung-Steuerung (263) das Charakterisieren der Trainingshandlung über eine volle Spanne der Trainingshandlung aufzeichnet und ein Unterstützungsprofil für die volle Spanne der Trainingshandlung definiert, wobei das Bestimmen des Niveaus der Kraftunterstützung als eine Funktion des Unterstützungsprofils ist.

4. System nach Anspruch 3, wobei das Unterstützungsprofil ein Konvertieren der Trainingshandlung in eine isokinetische Trainingshandlung über die volle Spanne der Trainingshandlung umfasst.

5. System nach einem der Ansprüche 3 und 4, wobei das Unterstützungsprofil ein Erhöhen oder Verringern des Niveaus der Unterstützung über ein Erhöhen der Wiederholungen der vollen Spanne der Trainingshandlung umfasst.

6. System nach einem der Ansprüche 1 bis 5, wobei die Modulationsschnittstelle ein Zahnrad aufweist, welches mit einer Zahnstange kämmt, wobei die Zahnstange dazu eingerichtet ist, mit einem Ende von wenigstens einem Kabel der Kraftübertragung verbunden zu sein.

7. System nach einem der Ansprüche 1 bis 5, wobei die Modulationsschnittstelle eine Winde (25) aufweist, wobei ein Kabel (72) der Kraftübertragung auf die Winde gewickelt ist.

8. System nach einem der Ansprüche 1 bis 5, wobei die Modulationsschnittstelle eine Seilscheibe (25) aufweist, welche mit Enden von Kabeln der Kraftübertragung verbunden ist.

9. System nach einem der Ansprüche 1 bis 5, wobei die Modulationsschnittstelle mit einer Trainingsfläche eines Laufbands verbunden ist, wobei die Trainingsfläche die Kraftübertragung ist.

10. System nach einem der Ansprüche 1 bis 9, wobei die wenigstens eine MR-Fluid-Kupplungsvorrichtung mit der Kraftübertragung durch die Modulationsschnittstelle derart gekoppelt ist, dass die wenigstens eine MR-Fluid-Kupplungsvorrichtung ein Drehmoment zum Reduzieren einer Kraft der Trainingshandlung auf den Benutzer überträgt.

11. System nach einem der Ansprüche 1 bis 10, wobei das Unterstützung-Erzeugungsmodul (264) die wenigstens eine MR-Fluid-Kupplungsvorrichtung in einem Schleifmodus für die Kraftübertragung hält, um eine Kraft auf den Benutzer ohne Unterstützung von der wenigstens einen MR-Fluid-Kupplungsvorrichtung zu übertragen.

12. System nach einem der Ansprüche 1 bis 11, wobei das Trainingsleistung-Berechnermodul (262) wenigstens eines aus einer Geschwindigkeit und einem Abbremsen über einen vorbestimmten Schwellenwert hinaus aus den Informationen detektiert, welche die Trainingshandlung anzeigen, und das Unterstützung-Erzeugungsmodul (264) die wenigstens eine MR-Fluid-Kupplungsvorrichtung steuert, um eine Kraft zu reduzieren, welche auf den Benutzer übertragen wird.

13. System nach einem der Ansprüche 1 bis 12, umfassend eine Mehrzahl der MR-Fluid-Kupplungsvorrichtungen, welche sämtlich einer jeweiligen Modulationsschnittstelle zugeordnet sind, und ferner umfassend eine einzelne der Drehmomentquelle (22), wobei der Eingang von jeder aus der Mehrzahl von MR-Fluid-Kupplungsvorrichtungen gemeinsam mit der einzelnen der Drehmomentquelle verbunden ist, und wobei ferner zwei aus der Mehrzahl von MR-Fluid-Kupplungsvorrichtungen optional mit einer gemeinsamen Kraftübertragung gekoppelt sind, wobei die beiden MR-Fluid-Kupplungsvorrichtungen eine Kraftunterstützung auf entgegengesetzte Richtungen einer Bewegung der Trainingshandlung ausüben.

14. System nach einem der Ansprüche 1 bis 13, wobei die Training-Prozessoreinheit (261) ferner ein Virtual Reality Trainingsumgebung-Modul umfasst, welches eine Virtual Reality Unterstützungsanzeige an das Trainingsunterstützung-Steuermodul (263) bereitstellt, wobei das Trainingsunterstützung-Steuermodul das Niveau einer Kraftunterstützung als eine Funktion der Virtual Reality Unterstützungsanzeige bestimmt.

15. Krafttraining-Vorrichtung, umfassend:
das System nach einem der Ansprüche 1 bis 14;
wenigstens eine Benutzerschnittstelle, welche dazu eingerichtet ist, manuell während einer Trainingshandlung bedient zu werden;
eine Kraftübertragung, welche die wenigstens eine Benutzerschnittstelle wenigstens mit der Modulationsschnittstelle verbindet, um eine Kraft zwischen der wenigstens einen Benutzerschnittstelle und der Modulationsschnittstelle zu übertragen.

## Revendications

1. Système pour assister un utilisateur lors d'un entraînement musculaire avec un dispositif d'entraînement musculaire (30) comprenant :
au moins une source de couple (22) ;
au moins un appareil d'embrayage à fluide magnéto-rhéologique (MR) (21) ayant une entrée accouplée à l'au moins une source de couple (22) pour recevoir un couple à partir de l'au moins une source de couple, l'appareil d'embrayage à fluide MR pouvant être commandé pour transmettre une quantité de couple variable via une sortie de celui-ci ;
une interface de modulation accouplant la sortie de l'au moins un appareil d'embrayage à fluide MR à une transmission de force (24) du dispositif d'entraînement (30) ;
au moins un capteur (23) pour fournir des informations indiquant une action d'entraînement par l'utilisateur ; et
une unité processeur d'entraînement (261) comprenant au moins un module calculateur d'effort d'entraînement (262) pour recevoir les informations indiquant l'action d'entraînement et pour caractériser l'action d'entraînement, un module dispositif de commande d'assistance à l'entraînement (263) pour déterminer un niveau d'assistance par la force à partir de la caractérisation de l'action d'entraînement, et un module générateur d'assistance pour commander l'au moins un appareil d'embrayage à fluide MR (21) lors de l'exercice de l'assistance par la force audit niveau sur la transmission de force du dispositif d'entraînement pour assister l'utilisateur lors de l'action d'entraînement à une largeur de bande qui est supérieure aux muscles du corps humain.

2. Système selon la revendication 1, dans lequel le calculateur d'effort d'entraînement (262) caractérise l'action d'entraînement en mesurant au moins une parmi une vitesse de la transmission de force, une distance de déplacement de la transmission de force, et une tension sur la transmission de force.

3. Système selon la revendication 1, dans lequel le dispositif de commande d'assistance à l'entraînement (263) enregistre la caractérisation de l'action d'entraînement sur une durée complète de l'action d'entraînement, et définit un profil d'assistance pour la durée complète de l'action d'entraînement, dans lequel la détermination du niveau d'assistance par la force dépend du profil d'assistance.

4. Système selon la revendication 3, dans lequel le profil d'assistance comprend la conversion de l'action d'entraînement en une action d'entraînement isocinétique sur la durée complète de l'action d'entraînement.

5. Système selon l'une quelconque des revendications 3 et 4, dans lequel le profil d'assistance comprend l'augmentation ou la diminution du niveau d'assistance au fil d'une augmentation de répétitions de la durée complète de l'action d'entraînement.

6. Système selon l'une quelconque des revendications 1 à 5, dans lequel l'interface de modulation a une roue dentée s'engrenant avec une crémaillère, la crémaillère étant configurée pour être reliée à une extrémité d'au moins un câble de la transmission de force.

7. Système selon l'une quelconque des revendications 1 à 5, dans lequel l'interface de modulation a un cabestan (25), un câble (72) de la transmission de force étant enroulé sur le cabestan.

8. Système selon l'une quelconque des revendications 1 à 5, dans lequel l'interface de modulation a une poulie (25) qui est reliée à des extrémités de câbles de la transmission de force.

9. Système selon l'une quelconque des revendications 1 à 5, dans lequel l'interface de modulation est reliée à une surface d'exercice d'un tapis roulant, la surface d'exercice étant la transmission de force.

10. Système selon l'une quelconque des revendications 1 à 9, dans lequel l'au moins un appareil d'embrayage à fluide MR est accouplé à la transmission de force par l'interface de modulation de telle sorte que l'au moins un appareil d'embrayage à fluide MR transmette un couple pour réduire une force de l'action d'entraînement sur l'utilisateur.

11. Système selon l'une quelconque des revendications 1 à 10, dans lequel le module générateur d'assistance (264) maintient l'au moins un appareil d'embrayage à fluide MR dans un mode de glissement pour que la transmission de force transmette une force à l'utilisateur sans assistance à partir de l'au moins un appareil d'embrayage à fluide MR.

12. Système selon l'une quelconque des revendications 1 à 11, dans lequel le module calculateur d'effort d'entraînement (262) détecte au moins un parmi une vitesse et un ralentissement au-delà d'un seuil prédéterminé à partir des informations indiquant l'action d'entraînement, et le module générateur d'assistance (264) commande l'au moins un appareil d'embrayage à fluide MR pour réduire une force transmise à l'utilisateur.

13. Système selon l'une quelconque des revendications 1 à 12, comprenant une pluralité des appareils d'embrayage à fluide MR chacun associé à une interface de modulation respective, et comprenant en outre une seule des sources de couple (22), l'entrée de chacun de la pluralité des appareils d'embrayage à fluide MR étant reliée de manière commune à la seule des sources de couple, et en outre dans lequel deux de la pluralité d'appareils d'embrayage à fluide MR sont optionnellement accouplés à une transmission de force commune, les deux appareils d'embrayage à fluide MR exerçant une assistance par la force sur des directions de mouvement opposées de l'action d'entraînement.

14. Système selon l'une quelconque des revendications 1 à 13, dans lequel l'unité processeur d'entraînement (261) comprend en outre un module d'environnement d'entraînement en réalité virtuelle fournissant une indication d'assistance en réalité virtuelle au module dispositif de commande d'assistance à l'entraînement (263), le module dispositif de commande d'assistance à l'entraînement déterminant le niveau d'assistance par la force en fonction de l'indication d'assistance en réalité virtuelle.

15. Appareil d'entraînement musculaire comprenant :
le système selon l'une quelconque des revendications 1 à 14 ;
au moins une interface utilisateur adaptée pour être manipulée manuellement durant une action d'entraînement ;
une transmission de force reliant l'au moins une interface utilisateur au moins à l'interface de modulation pour transmettre une force entre l'au moins une interface utilisateur et l'interface de modulation.
